# FASCICULE DE BREVET EUROPEEN

(11) **EP 0 817 507 B1**
(45) Date de publication et mention de la délivrance du brevet: **09.10.2002**
(21) Numéro de dépôt: 97201919.4
(22) Date de dépôt: 01.07.1997
(51) Int. Cl.: H04N 9/64, H04N 7/01, G09G 1/16

(54) **Procédé pour afficher une image provenant d'un processeur graphique de type VGA sur un téléviseur**
Verfahren zum Darstellen eines Bildes von einem Graphikprozessor des VGA-Typs auf einem Fernsehempfänger
Method for displaying a picture from a graphic processor of the VGA-type on a television receiver

(30) Priorité: 03.07.1996 FR 9608284
(43) Date de publication de la demande: 07.01.1998
(73) Titulaire: Koninklijke Philips Electronics N.V., 5621 BA Eindhoven (NL)
(72) Inventeur: Decraemer, Alain, 75008 Paris (FR); Nieuwenhuizen, Michel, 75008 Paris (FR)
(74) Mandataire: Charpail, François

(56) Documents cités:
- EP-A- 0 579 190
- EP-A- 0 588 499
- WO-A-96/03836
- FR-A- 2 656 487
- US-A- 4 500 908
- PATENT ABSTRACTS OF JAPAN vol. 16, no. 88 (E-1173), 4 Mars 1992 & JP 03 270484 A (FUJITSU GENERAL LTD), 2 Décembre 1991,
- PATENT ABSTRACTS OF JAPAN vol. 8, no. 281 (E-286), 21 Décembre 1984 & JP 59 148468 A (NIPPON DENSHIN DENWA KOSHA), 25 Août 1984,
- PATENT ABSTRACTS OF JAPAN vol. 10, no. 386 (E-467), 24 Décembre 1986 & JP 61 177070 A (NEC HOME ELECTRONICS LTD), 8 Août 1986,

## Description

La présente invention concerne un procédé pour afficher une image provenant d'un processeur graphique de type VGA en utilisant les moyens d'affichage par trames d'un téléviseur conventionnel.

Elle concerne également un appareil d'affichage d'images de télévision, muni de moyens d'affichage par trames et permettant l'affichage d'une image provenant d'un processeur graphique de type VGA.

Pour afficher une image provenant d'un processeur graphique de type VGA sur l'écran d'un téléviseur conventionnel, il a été proposé différents moyens pour modifier la fréquence de balayage. horizontal du téléviseur. Toutefois aucun n'est vraiment satisfaisant, et surtout ces moyens sont plutôt compliqués. Il a été également proposé, dans le document Patent Abstract of Japan 07306664 A et le brevet des Etats-Unis d'Amérique 5 815 208, de mémoriser les contenus de lignes pour les afficher de façon non synchrone par rapport à leur génération par le processeur graphique de type VGA.

Un objet de l'invention est de permettre l'affichage d'une image provenant d'un processeur graphique de type VGA sur l'écran d'un téléviseur conventionnel, de manière très simple.

A cet effet, on transmet vers les dits moyens d'affichage les lignes paires d'une image VGA pendant une trame et les lignes impaires pendant la trame suivante.

L'invention est donc basée sur la remarque que la durée de ligne d'un téléviseur conventionnel est, à très peu près, la moitié de celle d'un moniteur VGA, et que par conséquent l'affichage d'une ligne sur deux peut se faire en modifiant très peu la vitesse de balayage.

Un appareil et un procédé selon l'invention sont exposés dans les revendications 1 et 6.

Avantageusement, on décale les impulsions de synchronisation de l'image VGA d'environ une demi durée de ligne VGA.

Dans un mode de réalisation particulier, les moyens pour retarder les impulsions comprennent deux circuits de temporisation en cascade, l'un pour fixer le temps de retard, l'autre pour fixer la durée de l'impulsion retardée.

L'appareil d'affichage d'images est muni avantageusement de moyens pour faire varier l'amplitude du balayage ligne.

Ainsi l'image affichée peut occuper toute la largeur de l'écran.

Lorsque l'appareil d'affichage d'images est muni d'un tube écran à faisceau cathodique et d'un dispositif qui génère un courant en dents de scie dans un bobinage déviateur du faisceau, avec une capacité dite de S en série avec le bobinage, les moyens pour faire varier l'amplitude du balayage ligne sont avantageusement des moyens de commutation d'une autre capacité de S.

Ainsi, c'est surtout la partie centrale des lignes qui est allongée.

Ces aspects de l'invention ainsi que d'autres aspects plus détaillés apparaîtront plus clairement grâce à la description suivante d'un mode de réalisation constituant un exemple non limitatif.

La figure 1 représente schématiquement un téléviseur.

La figure 2 est un diagramme de temps illustrant différents signaux d'une image VGA.

La figure 3 est un autre diagramme de temps illustrant différents signaux utilisés pour afficher une image VGA sur un téléviseur.

La figure 4 est un schéma de circuit réalisant des opérations sur les signaux pour afficher une image VGA sur un téléviseur.

Les figures 5 et 6 illustrent comment on peut améliorer l'image obtenue.

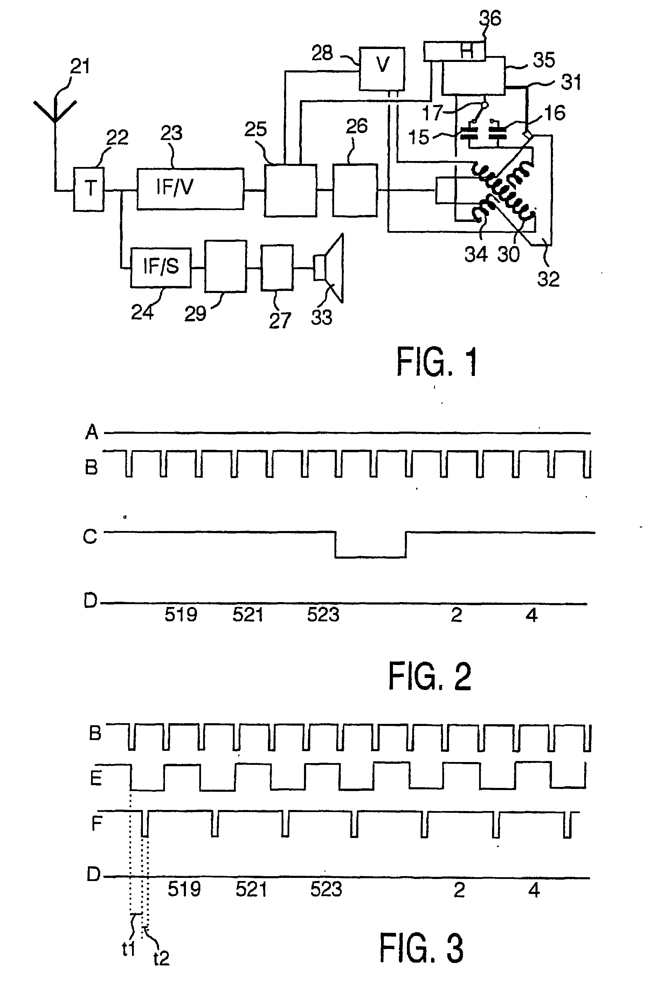

Le téléviseur dont le schéma est représenté sur la figure 1 comprend un syntoniseur 22 recevant un signal par exemple d'une antenne 21 et transposant sa fréquence vers des fréquences intermédiaires destinées à un amplificateur à fréquence intermédiaire vidéo 23 et à un amplificateur à fréquence intermédiaire son 24. L'amplificateur à fréquence intermédiaire son 24 est suivi d'un démodulateur 29 qui délivre les signaux audio en bande de base à un amplificateur de puissance audio 27, alimentant un haut-parleur 33.

L'amplificateur à fréquence intermédiaire vidéo 23 est suivi d'une unité 25 qui fournit un signal vidéo en bande de base à un amplificateur vidéo 26 délivrant des signaux vidéo à un tube écran 32 à faisceau cathodique. L'unité 25 extrait aussi du signal des signaux de synchronisation trame et ligne qui sont amenés respectivement à un circuit de balayage trame 28, qui délivre un courant dans un bobinage déviateur 30 de trame, et à un circuit de balayage ligne 36, associé à une unité de puissance lignes 35 qui délivre, via une capacité de liaison 15 dite capacité de S, un courant dans un bobinage déviateur 34 de ligne, et produit en outre une tension d'environ 25 kV, pour alimenter l'écran du tube écran, auquel elle est reliée par une connexion 31.

Pour mémoire, la fréquence de balayage ligne dans la norme VGA est de 31500 Hz, et la fréquence trame de 60 Hz. La demi-fréquence de balayage ligne VGA est donc de 15750 Hz, et la fréquence lignes d'un téléviseur dit "625 lignes" est de 15625 Hz, c'est-à-dire une valeur voisine. Les circuits de synchronisation du balayage lignes d'un téléviseur sont capables d'accepter le passage de 15625 à 15750 lignes sans modification particulière, et de même les circuits de synchronisation du balayage trame sont capables d'accepter le passage de 50 Hz à 60 Hz.

L'information vidéo de type VGA est portée par trois signaux de couleur dits R G B.

Sur la figure 2, la ligne A montre des contenus vidéo de lignes successives d'image VGA. La ligne B montre des impulsions de synchronisation ligne correspondantes. La ligne C montre une impulsion de synchronisation trame correspondante. La ligne D montre une ligne identique à la ligne A mais dans laquelle, pendant la trame qui se termine à gauche de la figure, seulement les lignes impaires de l'image VGA sont conservées (la figure montre les dernières, portant les numéros 519, 521, 523) et, pendant la trame qui commence à droite de la figure, seulement les lignes paires sont conservées (la figure montre les premières portant les numéros 2, 4). Si un téléviseur affiche les contenus des lignes indiquées en D, il produira par entrelacement l'image complète d'origine, en deux trames au lieu d'une.

Sur la figure 3, la ligne B montre à nouveau les impulsions de synchronisation ligne VGA. La ligne E montre des signaux obtenus en déclenchant une bascule bistable par les fronts descendants du signal de la ligne B. Les fronts descendants du signal de la ligne E déclenchent un circuit de temporisation, qui apporte un retard t1, et ce dernier déclenche à son tour un circuit de temporisation dont la durée est t2, ce qui procure finalement les impulsions de la ligne F. La ligne D est la même que celle de la figure 2. Les contenus vidéo y sont centrés par rapport aux impulsions de la ligne F, alors qu'ils auraient été décalés vis-à-vis des bords de l'écran du téléviseur, si l'on n'avait pas retardé les impulsion de la ligne F par rapport au début de celles de la ligne E. Ce décalage est d'environ une demi durée de ligne VGA.

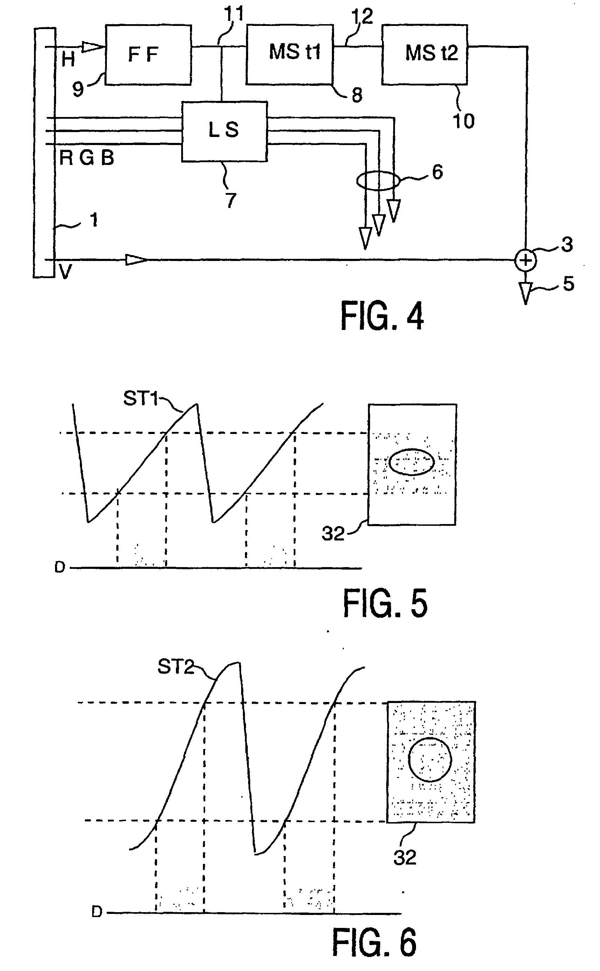

Le circuit de la figure 4 réalise les opérations nécessaires sur les signaux VGA pour afficher l'image VGA sur un téléviseur. Les signaux VGA de synchronisation horizontale H, de synchronisation verticale V, et les signaux R G B, sont amenés sur un connecteur d'entrée 1, qui peut être par exemple le connecteur de péritélévision du téléviseur. Un circuit 7 de sélection de lignes transmet le signal R G B ou lui barre la route, une ligne sur deux, de façon à créer trois signaux de couleur, chacun comme représenté en ligne D des figures 3 ou 4. Ce signal est amené par les trois connexions 6 à l'amplificateur vidéo 26 de la figure 1. Le circuit 7 est par exemple constitué de trois portes analogiques, une pour chacun des signaux R, V, B.

A partir du signal H, une bascule flip-flop 9, par exemple une bascule dite J-K, divise par deux la fréquence de synchronisation ligne VGA, et fournit en 11 le signal de la ligne E de la figure 3. Ce signal est amené au circuit 7 pour commander les portes.

Un circuit de temporisation 8, par exemple un circuit monostable, reçoit aussi le signal de la bascule 9. Au bout d'un temps t1 après le front descendant du signal en 11, il fournit lui même un front descendant en 12.

Un deuxième circuit de temporisation 10, par exemple encore un circuit monostable, reçoit le signal en 12, et délivre en réponse une impulsion de durée t2, correspondant au signal de la ligne F de la figure 3. Ces impulsions sont retardées d'environ une demi durée de ligne VGA, par rapport aux fronts descendants des impulsions de la ligne E.

Un additionneur analogique 3 ajoute au signal issu du circuit 10 le signal V, ce qui produit en 5 un signal de synchronisation à la fois ligne et trame, qui est amené au circuit 25 de la figure 1.

La figure 5 montre des dents de scie ST1 de balayage ligne, et en 32 l'écran du téléviseur, dont les lignes dites horizontales sont ici verticales, autrement dit l'écran est tourné de 90°par rapport à sa position normale. Si l'on se contente de mettre en oeuvre les moyens décrits ci-dessus, le signal vidéo de la ligne D correspond temporellement, pour chaque ligne, à la partie de dent de scie comprise entre les deux lignes verticales en tirets, c'est-à-dire que l'image obtenue sur l'écran est celle comprise entre les deux lignes horizontales en tirets.

La figure 6 montre comment l'affichage peut être amélioré en augmentant l'amplitude du balayage ligne. Elle montre des dents de scie ST2 de balayage ligne allongées par rapport à celles de la figure 5, et dont la forme en S est plus accentuée, c'est-à-dire que c'est surtout la partie centrale de la ligne qui a été allongée. Le signal vidéo de la ligne D correspond toujours temporellement, pour chaque ligne, à la partie de dent de scie comprise entre les deux lignes verticales en tirets, et l'image obtenue sur l'écran est celle comprise entre les deux lignes horizontales en tirets, elle occupe maintenant toute la largeur de l'écran, et a ses proportions normales.

Un allongement du balayage lignes comme celui de la figure 6 par rapport à la figure 5 peut être obtenu en réduisant la valeur de la capacité 15 de S (figure 1). Ceci peut être obtenu en remplaçant la capacité 15 par une autre capacité 16 plus petite, au moyen de n'importe quel système commutateur connu 17, qui ne fait pas partie de la présente invention : par exemple, un moyen pour commuter une capacité de S est décrit dans le document EP-A-96 202 557.3. En variante, un interrupteur pourrait aussi être branché de manière à ajouter une capacité de S additionnelle en parallèle sur la capacité 15, au lieu de commuter une capacité 16 à sa place. Dans ce cas, l'interrupteur ajoutant la capacité additionnelle devrait être fermé, afin de mettre la capacité de S additionnelle en service, pendant la marche normale du téléviseur, et ouvert afin de mettre la capacité de S additionnelle hors service, lorsque des images VGA sont affichées.

## Revendications

1. Appareil d'affichage d'images de télévision comprenant des moyens d'affichage par trames, et des moyens de traitement d'un signal d'image VGA pour permettre l'affichage du contenu d'une image VGA sur lesdits moyens d'affichage par trames, lesdits moyens de traitement étant **caractérisés en ce qu**'ils comprennent :
- des moyens de génération (9) pour générer, à partir du signal (H) de synchronisation ligne dudit signal d'image VGA, un signal de commande (11) de fréquence moitié,
- des moyens de mise en forme (8, 10) dudit signal de commandé pour générer un signal de synchronisation ligne desdits moyens d'affichage,
- des moyens de sélection (7) commandés par ledit signal de commande (11) pour sélectionner d'une part les lignes paires d'une image VGA pendant une trame d'image VGA, et d'autre part les lignes impaires pendant la trame suivante, lesdites lignes paires et impaires formant respectivement une première et une deuxième trame envoyées vers lesdits moyens d'affichage.

2. Appareil d'affichage d'images de télévision selon la revendication 1 **caractérisé en ce que** lesdits moyens de mise en forme comprennent un premier circuit de temporisation (8) et un deuxième circuit de temporisation (10) mis en cascade, pour respectivement retarder et fixer la durée de chaque impulsion constituant ledit signal de synchronisation ligne desdits moyens d'affichage.

3. Appareil d'affichage d'images de télévision selon la revendication 2 **caractérisé en ce qu'**il comprend des moyens d'addition (3) pour additionner ledit signal de synchronisation ligne desdits moyens d'affichage au signal (V) de synchronisation trame dudit signal d'image VGA, pour générer un signal unique (5) de synchronisation ligne et trame desdits moyens d'affichage.

4. Appareil d'affichage d'images de télévision selon la revendication 3 **caractérisé en ce qu'**il comprend des moyens (15, 16, 17) permettant de faire varier l'amplitude du balayage ligne desdits moyens d'affichage.

5. Appareil d'affichage d'images de télévision selon la revendication 4 **caractérisé en ce que** lesdits moyens permettant de faire varier l'amplitude du balayage ligne comprennent des moyens de commutation (17) d'une capacité (15) à une autre capacité (16), pour mettre en série ladite capacité commutée. avec le bobinage déviateur ligne (34) desdits moyens d'affichage.

6. Procédé pour afficher des images de télévision, ledit procédé comprenant une étape de traitement d'un signal d'image VGA pour permettre l'affichage du contenu d'une image VGA sur des moyens d'affichage par trames, ladite étape de traitement étant **caractérisée en ce qu'**elle comprend :
- une sous-étape de génération (9) pour générer, à partir du signal (H) de synchronisation ligne dudit signal d'image VGA, un signal de commande (11) de fréquence moitié,
- une sous-étape de mise en forme (8, 10) dudit signal de commande pour générer un signal de synchronisation ligne desdits moyens d'affichage,
- une sous-étape de sélection (7) commandée par ledit signal de commande (11) pour sélectionner d'une part les lignes paires d'une image VGA pendant une trame d'image VGA, et d'autre part les lignes impaires pendant la trame suivante, lesdites lignes paires et impaires formant respectivement une première et une deuxième trame envoyées vers lesdits moyens d'affichage.

7. Procédé selon la revendication 6 **caractérisé en ce que** ladite sous-étape de mise en forme comprend une première phase de temporisation (8) et une deuxième phase de temporisation (10) mis en cascade, pour respectivement retarder et fixer la durée de chaque impulsion constituant ledit signal de synchronisation ligne desdits moyens d'affichage.

## Claims

1. An apparatus for displaying television images comprising field-display means and means for processing a VGA image signal for displaying the contents of a VGA image on said field-display means, said processing means being **characterized in that** they comprise:
means (9) for generating, from the line-synchronizing signal (H) of said VGA image signal, a control signal (11) of half the frequency,
means (8, 10) for forming said control signal so as to generate a line-synchronizing signal of said display means,
selection means (7) controlled by said control signal (11) for selecting the even lines of a VGA image during a VGA image field and the odd lines during the next field, said even and odd lines constituting a first and a second field, respectively, applied to said display means.

2. An apparatus for displaying television images as claimed in claim 1, **characterized in that** said forming means comprise a first time-delay circuit (8) and a second time-delay circuit (10) arranged in cascade for delaying and fixing the duration, respectively, of each pulse constituting said line-synchronizing signal of said display means.

3. An apparatus for displaying television images as claimed in claim 2, **characterized in that** it comprises means (3) for adding said line-synchronizing signal of said display means to the field-synchronizing signal (V) of said VGA image signal for generating a single line and field-synchronizing signal (5) of said display means.

4. An apparatus for displaying television images as claimed in claim 3, **characterized in that** it comprises means (15, 16, 17) for varying the line-scanning amplitude of said display means.

5. An apparatus for displaying television images as claimed in claim 4, **characterized in that** said means for varying the line-scanning amplitude comprise means (17) for switching from one capacitance (15) to another capacitance (16) for arranging said switched capacitance in series with the line deflection coil (34) of said display means.

6. A method of displaying television images, the method comprising a step of processing a VGA image signal for displaying the contents of a VGA image on field-display means, said processing step being **characterized in that** they it comprises the substeps of:
- generating (9), from the line-synchronizing signal (H) of said VGA image signal, a control signal (11) of half the frequency,
- forming (8, 10) said control signal so as to generate a line-synchronizing signal of said display means,
- selection (7) controlled by said control signal (11) for selecting the even lines of a VGA image during a VGA image field and the odd lines during the next field, said even and odd lines constituting a first and a second field, respectively, applied to said display means.

7. A method as claimed in claim 6, **characterized in that** sub-step of forming comprises a first time-delay phase (8) and a second time-delay phase (10) in cascade for delaying and fixing the duration, respectively, of each pulse constituting said line-synchronizing signal of said display means.

## Patentansprüche

1. Fernsehbild-Anzeigegerät mit Raster-Anzeigeverfahren und Verarbeitungsverfahren eines VGA-Bildsignals, um die Anzeige eines VGA-Bildinhalts auf den besagten Raster-Anzeigeverfahren zu ermöglichen, Verarbeitungsverfahren **dadurch gekennzeichnet, dass** sie enthalten:
- Erzeugungsverfahren (9) zum Erzeugen anhand des Zeilen-Synchronisationssignals (H) des besagten VGA-Bildsignals eines Steuersignals (11) mit halber Frequenz,
- Formatierungsverfahren (8, 10) des besagten Steuersignals zum Erzeugen eines Zeilen-Synchronisationssignals der besagten Anzeigeverfahren,
- Auswahlverfahren (7), von dem besagten Steuersignal (11) gesteuert, um einerseits die geraden Zeilen eines VGA-Bildes über ein VGA-Bildraster auszuwählen, und andererseits die ungeraden Zeilen über das darauffolgende Raster, wobei die besagten geraden und ungeraden Zeilen respektive ein erstes und ein zweites, an die besagten Anzeigeverfahren übertragenes Raster bilden.

2. Fernsehbild-Anzeigegerät nach Anspruch 1, **dadurch gekennzeichnet, dass** die besagten Formatierungsverfahren eine erste Verzögerungsschaltung (8) und eine zweite Verzögerungsschaltung (10) in Kaskade enthalten, um respektive die Dauer jedes Impulses zur Bildung des besagten Zeilen-Synchronisationssignals der besagten Anzeigeverfahren zu verzögern und festzulegen.

3. Fernsehbild-Anzeigegerät nach Anspruch 2, **dadurch gekennzeichnet, dass** es Addierverfahren (3) enthält, um des besagte Zeilen-Synchronisationssignal der besagten Anzeigeverfahren und das Raster-Synchronisationssignal (V) des besagten VGA-Bildsignals zu addieren, um ein einziges Zeilen- und Raster-Synchronisationssignal (5) der besagten Anzeigeverfahren zu erzeugen.

4. Fernsehbild-Anzeigegerät nach Anspruch 3, **dadurch gekennzeichnet, dass** es Verfahren (15, 16, 17) enthält, um zu ermöglichen, die Zeilen-Abtastamplitude der besagten Anzeigeverfahren variieren zu lassen.

5. Fernsehbild-Anzeigegerät nach Anspruch 4, **dadurch gekennzeichnet, dass** die besagten Verfahren, um zu ermöglichen, die Zeilen-Abtastamplitude der besagten Anzeigeverfahren variieren zu lassen, Umschaltverfahren (17) von einer Kapazität (16) zu einer anderen Kapazität (16) enthalten, um die besagte geschaltete Kapazität in Serie mit der Zeilen-Umlenkspule (34) der besagten Anzeigeverfahren zu bringen.

6. Fernsehbild-Anzeigeverfahren, wobei das besagte Verfahren einen Verar-5 beitungsschritt eines VGA-Bildsignals enthält, um die Anzeige eines VGA-Bildinhalts mit Raster-Anzeigeverfahren zu ermöglichen, Verarbeitungsschritt **dadurch gekennzeichnet, dass** er enthält:
- Erzeugungs-Unterschritt (9) zum Erzeugen anhand des Zeilen-Synchronisationssignals (H) des besagten VGA-Bildsignals eines Steuersignals (11) mit halber Frequenz,
- Formatierungs-Unterschritt (8, 10) des besagten Steuersignals zum Erzeugen eines Zeilensynchronisationssignals der besagten Anzeigeverfahren,
- Auswahl-Unterschritt (7), von dem besagten Steuersignal (11) gesteuert, um einerseits die geraden Zeilen eines VGA-Bildes über ein VGA-Bildraster auszuwählen, und andererseits die ungeraden Zeilen über das darauffolgende Raster, wobei die besagten geraden und un-5 geraden Zeilen respektive ein erstes und ein zweites, an die besagten Anzeigeverfahren übertragenes Raster bilden.

7. Verfahren nach Anspruch 6, **dadurch gekennzeichnet, dass** der Formatierungs-Unterschritt eine erste Verzögerungsphase (8) und eine zweite Verzögerungsphase (10) in Kaskade enthält, um respektive die Dauer jedes Impulses zur Bildung des besagten Zeilen-Synchronisationssignals der besagten Anzeigeverfahren zu verzögern und festzulegen.
